# EUROPEAN PATENT APPLICATION

(11) **EP 1 818 265 A2**
(43) Date of publication of application: **15.08.2007**
(21) Application number: 07250505.0
(22) Date of filing: 08.02.2007
(51) Int. Cl.: B65D 1/34, B31F 1/08, B65D 77/20, B32B 27/10

(54) **Improvements in or relating to high temperature formed paperboard packing trays for hermetic sealing**

(30) Priority: 10.02.2006 GB 0602655
(71) Applicant: Wilkins, Andre Philip, Private Road No. 1 Colwick Industrial Estate Nottingham NG4 2JQ (GB)
(72) Inventor: Wilkins, Andre Philip, Private Road No. 1 Colwick Industrial Estate Nottingham NG4 2JQ (GB)
(74) Representative: Khan, Mohammed Saiful Azam

(57) **Abstract**

A paperboard blank (100), arranged to be formable into a high temperature paperboard packing tray (300), the blank having an inner face and an outer face, the inner face forming the tray interior and comprising a high temperature polymer layer (120), the blank comprising crease lines (150) to allow the blank to be formed into the tray, and wherein the crease lines are formed to project out of the inner face of the blank.

## Description

### Introduction

The present invention relates to improvements in or relating to high temperature formed paperboard packing trays, which are used to house foodstuffs in a hermetically (air-tight) sealed environment. The foodstuffs may be solid, liquid or a combination thereof.

The paperboards are formed into trays from flat blanks of laminated paperboard (e.g. cardboard). The trays are hermetically sealed by means of a sealing lid, which is used to close the opening in the tray formed from the flat blank. These lids are preferably paperboard, but could also be sealable film, either printed or unprinted on the outside.

The high temperature formed paperboard trays represent a convenient way to package foodstuffs (for example, so-called "ready-meals"). The trays according to the present invention are high temperature in the sense that the trays are designed to be heated, in a microwave and/or a conventional gas/electric oven and /or accelerated air high temperature ovens (such as Turbochef^{™}), to cook/warm the foodstuffs contained therein. Ideally, upon heating/cooking, the hermetic seal is broken to prevent explosion of the contents out of the tray, and also to allow ready access to the foodstuffs contained therein.

### Background

Packing trays are known. For example, US 6651874 provides a high temperature paperboard packing tray formed from a blank. However, improvements are required which provide a packing tray which is easily formed from a blank, but which still provides a reliable hermetic seal.

### Summary of the Present Invention

According to a first aspect, the present invention provides a blank, arranged to be formable into a high temperature paperboard packing tray, the blank having an inner face and an outer face, the inner face forming the tray interior and comprising a high temperature polymer layer, the blank comprising crease lines to allow the blank to be formed into the tray, and wherein the crease lines are formed to project out of the inner face of the blank.

In the prior art, the crease lines are formed to project out of the outer face of the blank i.e. they are formed by providing compressive forces to the polymer layer. In contrast, the present invention provides expansive forces to polymer layer to form the creases by providing compressive forces on the outer face of the blank.

The high temperature polymer layer may be formed from a continuous sheet of polymer film.

The high temperature polymer layer may be formed from a continuous sheet of polymer film which is adhered to an underlying paperboard layer by an adhesive.

The crease lines may be arranged to extend radially around the perimeter of the blank.

The crease lines may be of different length, the crease lines of a first length being different to the crease lines of a second length. The first and second differing length crease lines may arranged to alternate around the perimeter of the blank.

The first and second differing length crease lines may be arranged to alternate around the perimeter of the blank in a region of the blank which is used to form a corner of the tray.

The outer face of the blank may comprise an ink layer. The outer face of the blank may comprise an ink layer over which is applied a protective varnish layer.

The ink layer maybe applied on a clay coating layer, the clay coating layer having been applied to the paperboard layer of the blank.

The paperboard may comprise cardboard.

The blank may comprise an internal layer comprising cardboard, the internal layer having a high temperature polymer layer applied to one face to form the inner face of the blank, and the opposing face of the internal layer having an ink layer applied to form the outer face of the blank.

The high temperature polymer layer may be formed from PET (polyethylene perephthalate).

Score lines may be applied to the outer face of the blank, the score lines arranged to limit blistering, bubbling or undue disfiguration of the tray during heated use.

The score lines may be arranged to limit blistering, bubbling or undue disfiguration of the tray during heated use, and wherein the score lines do not extend into the high temperature polymer layer.

According to a second aspect, the present invention provides a method of creasing a paperboard blank, the paperboard blank for forming a high temperature paperboard packing tray, the blank having an inner face and an outer face, the inner face for forming the tray interior and comprising a high temperature polymer layer, the method comprising creasing the blank from the outer face of the blank to produce crease lines formed to project out of the inner face of the blank.

The crease lines may comprise plastically deformed regions of the polymer layer.

The crease lines may form a depression channel on the outer face of the blank.

The crease lines may plastically deform the blank.

The creasing may comprise pushing on the outer face of the blank using a die to push the crease line out of the inner face of the blank.

According to a third aspect, the present invention provides a method of forming a high temperature paperboard packing tray from a paperboard blank, the blank having an inner face and an outer face, the inner face forming the tray interior and comprising a high temperature polymer layer, the blank comprising crease lines to allow the blank to be formed into the tray, wherein the crease lines are formed to project out of the inner face of the blank, and wherein the blank comprises a outer rim, the method comprising :
using a press to push the inner face of the blank with respect to the outer rim to form the tray.

The method may comprise using a variable speed press to push the inner face of the blank with respect to the outer rim to form the tray.

The method may comprise using a variable speed press to push the inner face of the blank with respect to the outer rim to form the tray, the variable speed press arrangable to use a first speed and a second speed during the forming process, the second speed being slower than the first speed, the method using the first speed before the second speed during the forming process.

The method may comprise applying heat to the blank during the forming process.

The method may comprise applying heat to the inner face of the blank during the forming process.

The method may comprise applying heat to the outer face of the blank during the forming process.

The method may comprise applying a coating to the press to inhibit the press from permanently attaching to the inner polymer layer.

According to a fourth aspect, the present invention provides a method of hermetically sealing a high temperature paperboard packing tray formed from a paperboard blank, the blank having an inner face and an outer face, the inner face forming the tray interior and comprising a high temperature polymer layer, the blank comprising crease lines to allow the blank to be formed into the tray, wherein the crease lines are formed to project out of the inner face of the blank, and wherein the blank comprises an outer rim which forms the outer sealing rim of the tray, the method comprising sealing a lid to the rim of the tray using two spaced apart adjacent heating points applied to the rim of the tray to form a double seal.

The two spaced apart adjacent heating points may be applied to the underside of the rim of the tray.

The method may comprise applying pressure between the lid and the rim.

The method may comprise moving the sealing lid down onto the rim.

The method may comprise using a sealing lid, the sealing side of the rim comprising a polymer layer.

The method may comprise using a packing tray formed using the method according to the third aspect of the invention.

In a fifth aspect, the present invention provides a tray formed using the method according to the third or fourth aspects.

The present invention may also provide a batch of paperboard blanks each blank according to the first aspect. The batch may comprise at least 10, 20, 30, 40, 50, 60, 70, 80, 90 or 100 blanks or at least a number therebetween. Similarly, the present invention may provide a batch of trays formed using one of the methods according to the present invention.

### Brief Description of Figures

Specific embodiment of the present invention will be described with reference to the accompanying drawings in which :
Figure 1 shows a cross section through a portion of the blank according to the present invention;
Figure 2 shows a cross section through another portion of the blank in which a crease has been applied according to the present invention;
Figure 3 shows a plan view of the outer face of a blank according to the present invention;
Figure 4 shows a plan view of the outer face of a blank according to the present invention;

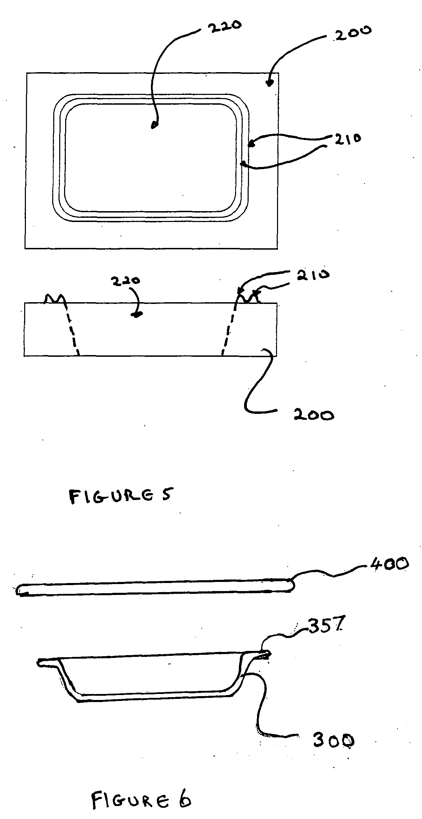

Figure 5 shows a baseplate used to seal a formed tray according to the present invention;
Figure 6 shows a side view of a tray according to the present invention;

### Specific Embodiments

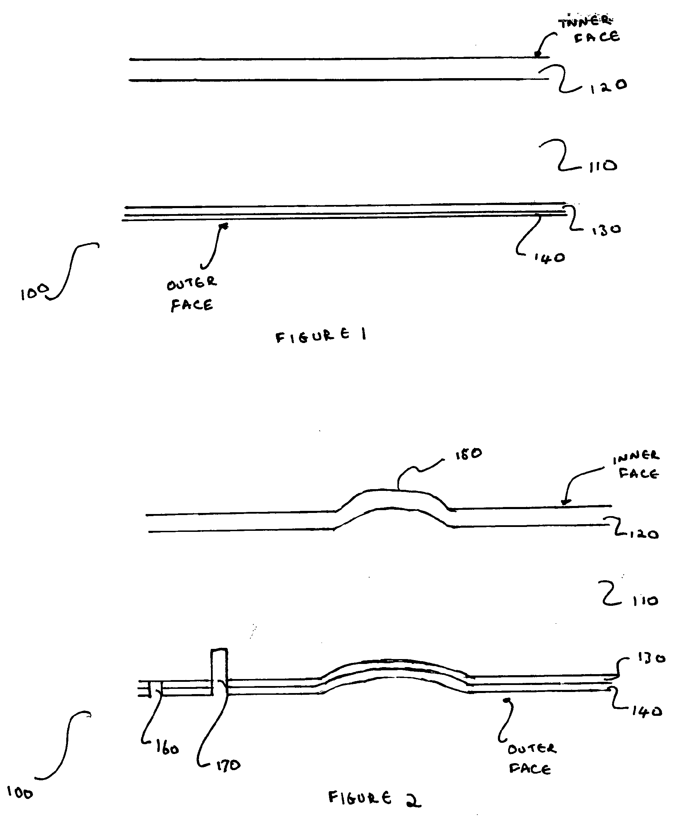

A blank 100 (Figures 1-4) is used to form a tray 300 (Figure 6).

In cross section, the blank 100 can be seen to be made up of a number of layers 110, 120, 130, 140 (Figure 1) i.e. it is laminated.

The interior of the blank comprises a cardboard layer 110 upon one face of which is applied a PET (polyethylene perephthalate) layer 120. The PET layer 120 itself, does not have another layer upon it, and is thus exposed to be the inner face of the blank/formed tray. This inner face will be in contact with the foodstuff items contained within the tray 300, once the blank 100 has been formed into a tray 300 (Figure 6). The PET layer 120 thus provides an impermeable layer which keeps the foodstuffs from seeping into the other layers of the laminated board (and vice versa). The exact composition of the PET layer may vary according to requirements.

The PET layer 120 is applied by adhering a PET sheet onto the cardboard by means of an adhesive. This PET layer 120 is adhered such that it can be removed to enable recycling of the cardboard layer 110 after the tray 300 has been used. For example, a recyclable cardboard blank to which a PET sheet has been adhered can be obtained from various suppliers.

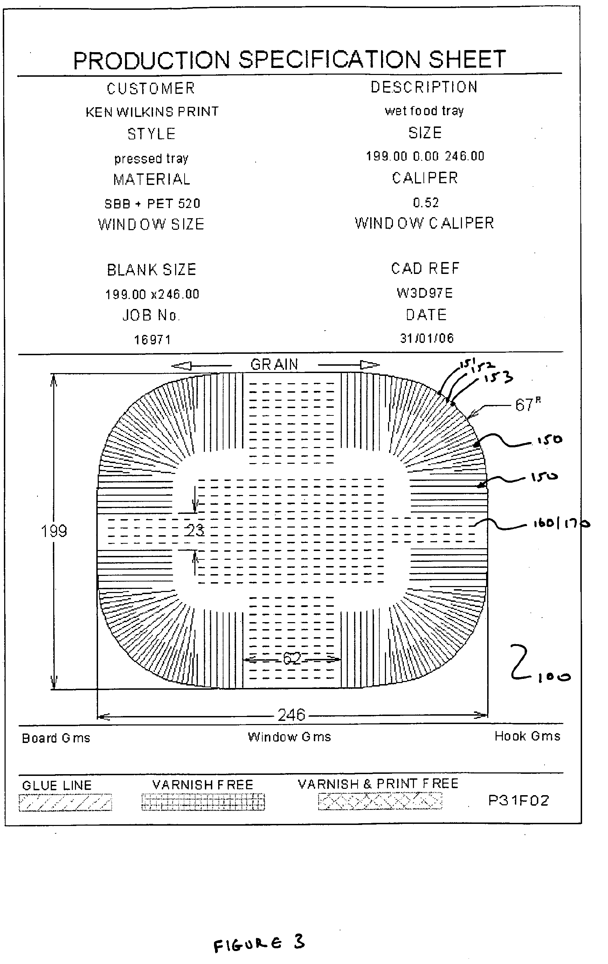

The other face of the cardboard layer 120 comprises an ink layer 130 which is protected by a varnish layer 140. The varnish layer 140 does not have another layer upon it and is thus exposed to be the outer face of the blank/formed tray. Although not shown in Figures 1 and 2, a clay coating layer may be applied between the cardboard layer 110 and the ink layer 130. This provides a very good surface for printing.

The thickness of the layers may vary depending on use. However, as an example, the cardboard layer 110 may be of the order of 500 microns, the PET layer 120 may be of the order of 20 microns, and the ink and varnish layer together may be of the order of 1-2 microns. These thicknesses are not precise, and practical tolerances apply in reality.

The outer face of the blank 100 comprises score lines 160, 170 (Figures 2-4). These score lines can be considered to represent openings in the outer face of the blank 100 i.e. they break one or more of the laminate layers 110, 130, 140 (and possibly the rear of the PET layer 120). These score lines 160, 170 do not penetrate all the way through the blank 100, but penetrate sufficiently such that they to limit blistering, bubbling or undue disfiguration of the tray during heated use. They can extend into the cardboard layer 110 more than that shown in Figure 2 (for example, they could at least extend half way into the 500 micron thickness). Score lines 160, 170 are discussed in WO2005/058727. All such type of score lines 160, 170 disclosed in WO2005/058727 can be used in the present invention.

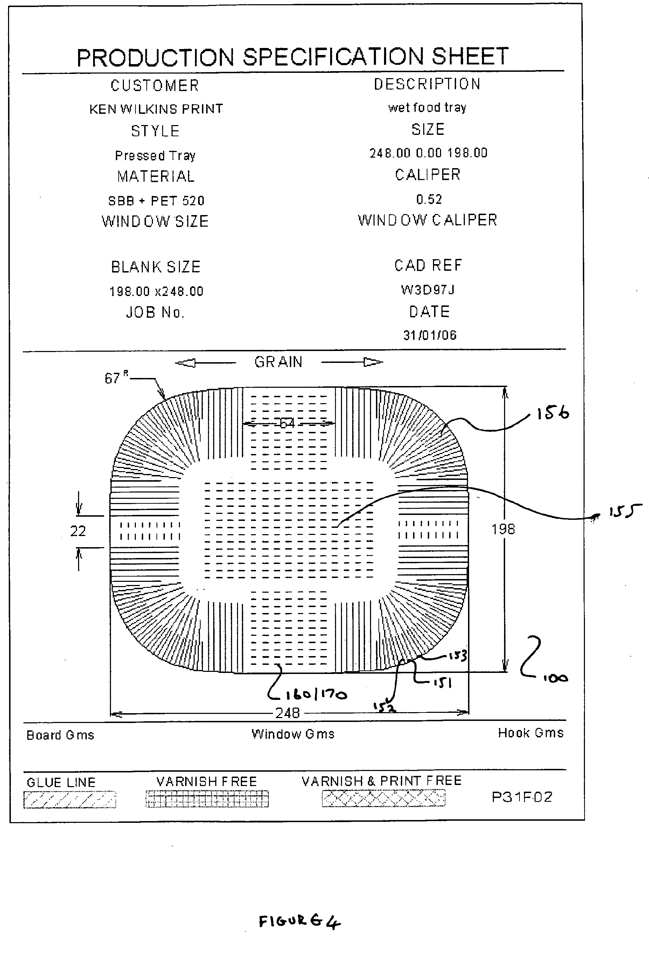

The score lines 160, 170 can be arranged in any suitable pattern on the outer face of the blank 100 (Figures 3-4). For example, they can occupy the central portion 155 of the outer face of the blank, and can also be positioned to extend out toward the perimeter of the blank in positions which are not significantly bent during formation into the tray 300 (i.e. where there are no crease lines 150 (discussed below) required, as shown in Figures 3-4).

The blank 100 also comprises crease lines 150, (151, 152. 153). The crease lines are arranged around the perimeter of the blank 100 (Figures 3-4) and are formed by using a die to apply pressure to the outer face of the blank 100 such that channels are formed on the outer face of the blank and corresponding projections are formed on the inner face of the blank 100 (Figure 2). A die of a complementary shape to the die applied to the outer face may be used on the inner face of the blank 100 to allow better formation and shaping of the crease line 150.

The crease lines 150 essentially compress the blank 100 from the outer face, without causing a separation in the layers (unlike the score lines 160, 170). The thickness of a crease may be slightly altered compared to the general thickness of the blank i.e. the compression can cause a reduction in the thickness of that portion of the blank compared to the pre-compression thickness. However, the thickness can be nominally considered to be the same.

It will be appreciated that scoring is a cutting process which causes separation either side of the score line. In contrast, creasing leaves the layers intact, and there is no separation either side of the crease line. The crease lines 150 may project out of the inner face of the blank 100 by 20 microns. It will also be appreciated that the cutting and scoring can be done at the same time using the same die, with scoring die elements differentially heighted to the creasing die elements.

The arrangement of the crease lines 150 are chosen to allow the blank 100 to be formed into a tray 300. Examples of the arrangement of crease lines 150 (151, 152, 153) are shown in Figures 3 and 4. The crease lines 150 do not all have to be the same length, and two, three or more different lengths may be used. Shorter crease lines 152, 153 may be provided in regions 156 (Figure 4) of the blank 100 which will undergo the most bending during formation of the tray 300 from the blank 100.

After formation of the crease lines 150, the integrity of the PET inner face of blank 100 can be checked by applying an oil-based dye to the inner face. If the crease lines 150 (or score lines 160, 170) have damaged the PET layer 120 such that it is no longer impermeable, the oil-based dye will tend to congregate in the damaged areas so that such areas can be easily identified.

The tray 300 is formed from the blank 100 by using a heated press, which not only applies pressure but heats the blank 100. The press comprises male and female components, the male component used to push down on the inner face of the blank 100, and the female component used to support the blank 100 and to receive male component. The male component may be set at a temperature of 70 °C and the female component set at a temperature of 110 °C.

The relative speed of movement of the male and female press components is variable such that a higher speed is used to initially push down on the inner face of the blank followed by a slower speed towards the end of the forming process. A coating can be applied to the press components to prevent the sticking of the components to the blank/tray 100/300 during the forming process. This coating may be electrolytic Nickel-Plating type NI 30-70 HRC.

Again, an oil-based dye can be used to check the integrity of the PET inner face of the formed tray 300.

Once the tray 300 is formed, foodstuffs can be placed in the tray. The tray 300 can then be hermetically sealed by using a lid 400. The lid 400 can be made of the same laminated material as the blank 100, with the PET layer of the lid 400 being used to seal against the outer PET layer rim 357 of the formed tray 300 (Figure 6). However, the exact composition of the lid PET layer and the tray PET layer may be different such that the lid 400 can be easily peeled away from the tray 300 after the ready meal has been cooked in an oven. Peelable boards which can be made into lids are available from various suppliers.

This sealing process is conducted using a baseplate 200 which has an aperture 220 in which the base of the tray 300 can be housed. The aperture is sized so as to be in contact with the sides of a tray 300 contained therein and thus inhibits movement of the tray 300 when it is held in the baseplate 200. The top of the baseplate 200 is arranged to support the underside of the rim 357 of the tray 300.

The top of the baseplate comprises two adjacent heating ridges 210 which are arranged to project out of the top of the baseplate 200 and surround the aperture 220. The heating ridges 210 are positioned and arranged to come into contact with the underside of the rim 357 of the formed tray 300.

When the tray 300 is housed in the aperture 220, heat is applied such that the ridges are at a temperature of 500 °C. The lid 400 is lowered onto the rim 357 of the tray 300. A pressure is applied for a particular time (e.g. 80psi for 1 second) to seal the rim 357 of the tray 300 to the PET layer of the lid 400. This seals the lid 400 to the formed tray 300.

The two adjacent heating ridges 210 provide two adjacent point contacts around the rim 357 of the tray and can conveniently form an air-tight seal with the lid.

Various modifications can be made to the present invention. The temperatures, pressures, material thickness, etc quoted above are only given as examples. These would vary dependent upon a number of factors, including the tray size and shape.

It should be noted that it is within the scope of the invention to design the packing tray with any other form than the described substantially rectangular shape. For example, the packing tray according to the invention may be designed with substantially circular or substantially elliptical shape, and can be of various depths (e.g. comparatively flat as shown in the figures or tall (not shown), for example, tall containers for housing soup/prepared drinks). The trays of the present invention are essentially containers. A possible alternative form of the packing tray according to the invention may have multiple compartments which may be arranged to be individually sealed with one of the coverings, optionally including scavenging with protective gas (MAP or CAP) during the sealing procedure.

The present invention encompasses one or more aspects and or embodiments in all various combinations, whether or not specifically described or claimed in that combination.

## Claims

1. A paperboard blank, arranged to be formable into a high temperature paperboard packing tray, the blank having an inner face and an outer face, the inner face forming the tray interior and comprising a high temperature polymer layer, the blank comprising crease lines to allow the blank to be formed into the tray, and wherein the crease lines are formed to project out of the inner face of the blank.

2. A blank according to claim 1, wherein the high temperature polymer layer is formed from a continuous sheet of polymer film.

3. A blank according to claim 1, wherein the high temperature polymer layer is formed from a continuous sheet of polymer film which is adhered to an underlying paperboard layer by an adhesive.

4. A blank according to claim 1, wherein the crease lines are arranged to extend radially around the perimeter of the blank.

5. A blank according to claim 1, comprising crease lines of a first length and crease lines of a second different length.

6. A blank according to claim 1, comprising crease lines of a first length and crease lines of a second different length, and wherein the first and second crease lines are arranged to alternate around the perimeter of the blank.

7. A blank according to claim 1, comprising crease lines of a first length and crease lines of a second different length, and wherein the first and second crease lines are arranged to alternate around the perimeter of the blank in a region of the blank which is used to form a corner of the tray.

8. A blank according to claim 1, wherein the outer face of the blank comprises an ink layer.

9. A blank according to claim 1, wherein the outer face of the blank comprises an ink layer over which is applied a protective varnish layer.

10. A blank according to claim 1, wherein the paperboard comprises cardboard.

11. A blank according to claim 1, wherein the blank comprises an internal layer comprising cardboard, the internal layer having a high temperature polymer layer applied to one face to form the inner face of the blank, and the opposing face of the internal layer having an ink layer applied to form the outer face of the blank.

12. A blank according to claim 1, wherein the high temperature polymer layer is formed from PET (polyethylene perephthalate).

13. A blank according to claim 1, comprising scores lines applied to the outer face of the blank, the score lines arranged to limit blistering, bubbling or undue disfiguration of the tray during heated use.

14. A blank according to claim 1, comprising scores lines applied to the outer face of the blank, the score lines arranged to limit blistering, bubbling or undue disfiguration of the tray during heated use, and wherein the score lines do not extend into the high temperature polymer layer.

15. A method of creasing a paperboard blank, the paperboard blank for forming a high temperature paperboard packing tray, the blank having an inner face and an outer face, the inner face for forming the tray interior and comprising a high temperature polymer layer, the method comprising creasing the blank from the outer face of the blank to produce crease lines formed to project out of the inner face of the blank.

16. A method according to claim 15, wherein the crease lines comprise plastically deformed regions of the polymer layer.

17. A method according to claim 15, wherein the crease lines form a depression channel on the outer face of the blank.

18. A method according to claim 15, wherein the crease lines plastically deform the blank.

19. A method according to claim 15, wherein the creasing comprises pushing on the outer face of the blank using a die to push the crease line out of the inner face of the blank.

20. A method of forming a high temperature paperboard packing tray from a paperboard blank, the blank having an inner face and an outer face, the inner face forming the tray interior and comprising a high temperature polymer layer, the blank comprising crease lines to allow the blank to be formed into the tray, wherein the crease lines are formed to project out of the inner face of the blank, and wherein the blank comprises a outer rim, the method comprising :
using a press to push the inner face of the blank with respect to the outer rim to form the tray.

21. The method according to claim 20, wherein the method comprises using a variable speed press to push the inner face of the blank with respect to the outer rim to form the tray.

22. The method according to claim 20, wherein the method comprises using a variable speed press to push the inner face of the blank with respect to the outer rim to form the tray, the variable speed press arrangable to use a first speed and a second speed during the forming process, the second speed being slower than the first speed, the method using the first speed before the second speed during the forming process.

23. The method according to claim 20, wherein the method comprises applying heat to the blank during the forming process.

24. The method according to claim 20, wherein the method comprises applying heat to the inner face of the blank during the forming process.

25. The method according to claim 20, wherein the method comprises applying heat to the outer face of the blank during the forming process.

26. The method according to claim 20, wherein the method comprises applying a coating to the press to inhibit the press from permanently attaching to the inner polymer layer.

27. A method of hermetically sealing a high temperature paperboard packing tray formed from a paperboard blank, the blank having an inner face and an outer face, the inner face forming the tray interior and comprising a high temperature polymer layer, the blank comprising crease lines to allow the blank to be formed into the tray, wherein the crease lines are formed to project out of the inner face of the blank, and wherein the blank comprises an outer rim which forms the outer sealing rim of the tray, the method comprising sealing a lid to the rim of the tray using two spaced apart adjacent heating points applied to the rim of the tray to form a double seal.

28. A method according to claim 27, wherein the two spaced apart adjacent heating points are applied to the underside of the rim of the tray.

29. A method according to claim 27, wherein the method comprises applying pressure between the lid and the rim.

30. A method according to claim 27, wherein the method comprises moving the sealing lid down onto the rim.

31. A method according to claim 27, wherein the method comprises using a sealing lid, the sealing side of the rim comprising a polymer layer.

32. A method according to claim 27, using a packing tray formed using the method of claim 20.

33. A tray formed using the method of claim 20 or 27.
